# EUROPEAN PATENT APPLICATION

(11) **EP 0 990 806 A2**
(43) Date of publication of application: **05.04.2000**
(21) Application number: 99307579.5
(22) Date of filing: 24.09.1999
(51) Int. Cl.: F16B 21/02, F16B 5/06

(54) **A fastener arrangement**

(30) Priority: 01.10.1998 GB 9821259
(71) Applicant: ROVER GROUP LIMITED, Warwick, Warwickshire CV34 6RG (GB)
(72) Inventor: Aston, Victor Ronald, Kingstanding, Birmingham B44 8QG (GB)
(74) Representative: Moffat, John Andrew

(57) **Abstract**

A fastener arrangement to secure members (1, 2) together in which a slot (3) in a first member (1) is engaged by a fastener head (10) in order to retain the members (1, 2) together. The fastener head (10) being coupled to a pivot arm (9) rotatable about a pivot mounting (8) between an entry configuration where the fastener head (10) is substantially aligned with the slot (3) and a retention configuration where that the fastener head is reorientated to prevent removal of that fastener head (10) from the slot (3) and so resiliently fastened the first member (1) to the second member (2). Thus, the members (1, 2) are secured together resiliently without the fastener arrangement being seen.

## Description

The present invention relates to a fastener arrangement and more particularly, but not exclusively, to such a fastener arrangement for use within a motor vehicle.

It is a common requirement to fasten two or more members together. Clearly, within any manufacturing process, the ease with which such fastening can be achieved is a major determining factor in the acceptability of the fastener arrangement. Furthermore, it may be desirable to provide a fastener arrangement which achieves the necessary degree of resilience for operational use but also retains the facility of release for maintenance or variation and is not detrimental to the appearance of the members fastened together.

Conventionally, fastening two members together has generally involved the use of nuts and bolts or screws or adhesives or similar devices. Unfortunately, use of such fasteners with regard to manufacture assembly increases the number of processing steps and complexity. An example of such manufacturing processes are those involved with regard to a motor vehicle and in particular the interior of that vehicle. It will be appreciated that a motor vehicle requires a large number of members to be assembled together and suitably fastened. Thus, the necessity of acting upon the fasteners described above with regard to securing these members together adds to complexity. Clearly, with regard to some members within a motor vehicle, it is necessary to provide a high degree of structural strength but other members are of a more decorative nature or at least only require nominal strength. In such circumstances, these decorative members should be secured within the vehicle with as great a degree of ease as possible. Furthermore, in order to allow adaptability, the fastening arrangement used should allow easy release in order to change the vehicle configuration in accordance with desired requirements and, if possible, not be seen.

It is an object of the present invention to provide a fastener arrangement which substantially achieves the above-mentioned objectives.

In accordance with the present invention there is provided a fastener arrangement for securing members together, the arrangement comprising a slot in a first member and a fastener mechanism in a second member, the fastener mechanism comprising a pivot arm secured to the second member through a pivot mounting and having a fastener head configured to enter the slot in the first member such that, in use upon appropriate load application between the first member and the second member, said pivot arm rotates about the pivot mounting and the fastener head is reorientated to engage the slot to prevent removal therefrom and so resiliently fasten said first member to said second member.

Preferably, the first member can be released from said second member by application of an appropriate release load between said first and said second member in order to reverse rotation about the pivot mounting to align the fastener head with the slot to enable removal therefrom.

Typically, the slot will have a T cross-section and may be a channel or a hole within the first member.

The fastener head may comprise an elongated wing member secured about the pivot arm and arranged to be moved through an appropriate angle, normally 90°, in order to engage the slot in use. Typically, the fastener head will include rounded ends in order to facilitate initiation and propagation of rotation of the fastener head within the slot in use.

Normally, the pivot mounting will be at a first of the pivot arm and the fastener head at a second end of the pivot arm.

The fastener head will normally be brought into compressive engagement with the slot.

Typically, guide means such as a guide rail or channel will be incorporated within the second member in order to guide the rotation of the pivot arm about the pivot mounting as required.

Lock means may be provided with regard to the pivot arm and in particular the fastener head in order to lock the fastener head in engagement with the slot to prevent removal therefrom. This lock means may comprise a grip or gradual constriction of the guide means as rotation about the pivot mounting progresses in order to precipitate an interference association between the pivot arm and the lock means.

The fastener arrangement may include hook means displaced with regard to the channel and fastener mechanism in order to facilitate fastener head entry to the slot and appropriate load application between the first member and the second member.

The appropriately applied load will normally be presented in a direction perpendicular to the longitudinal axis of the slot.

The first member may be a door panel within a motor vehicle and the second member an armrest component. Normally, the fastening arrangement according to the present invention will not be visible when the first member is fastened to the second member.

An embodiment of the present invention will now be described by way of example only with reference to the accompanying drawings, in which:
Figure 1 is a pictorial plan representation of a fastening arrangement just prior to fastening a first member to a second member;
Figure 2 is a pictorial side cross-section of the fastening arrangement as shown in Figure 1;
Figure 3 is a pictorial plan elevation of a fastener arrangement securing a first member to a second member; and
Figure 4 is a pictorial side cross-section of the fastener arrangement depicted in Figure 3.

It is clearly desirable with regard for fastener arrangements to be simple and non-intrusive upon the appearance of members secured by the fastener arrangement. This is particularly true with regard to manufacturing steps involved in production of a motor vehicle where ease of assembly is important along with the eventual aesthetic appearance, particularly within a cabin of such a vehicle. The fastener arrangement should not be seen by an occupant of the vehicle when the two members are secured together. For example, and for illustration purposes hereafter, an armrest within a motor vehicle will normally be secured to a door interior panel at the appropriate height to receive the occupant's arm. In such circumstances, the armrest should blend in with surrounding vehicle interior surfaces and it will be appreciated that appearance of a fastener may detract from the overall profile. Clearly, previous fasteners could be masked in appropriate manner, but it will be understood that such masking using cover caps, or the like, adds further assembly complications and is therefore undesirable.

In accordance with the present invention, the fastener arrangement combines a combination of a slot within a first member and a fastener mechanism secured to a second member. For the purpose of example, the first member may be an inner door panel of a motor vehicle, whilst the second member may be an armrest component to be secured to that inner door panel. It will be appreciated, in accordance with the present invention, that the slot and fastening mechanism could as an alternative be secured vice versa with regard to the first member (inner door panel) and the second member (armrest component).

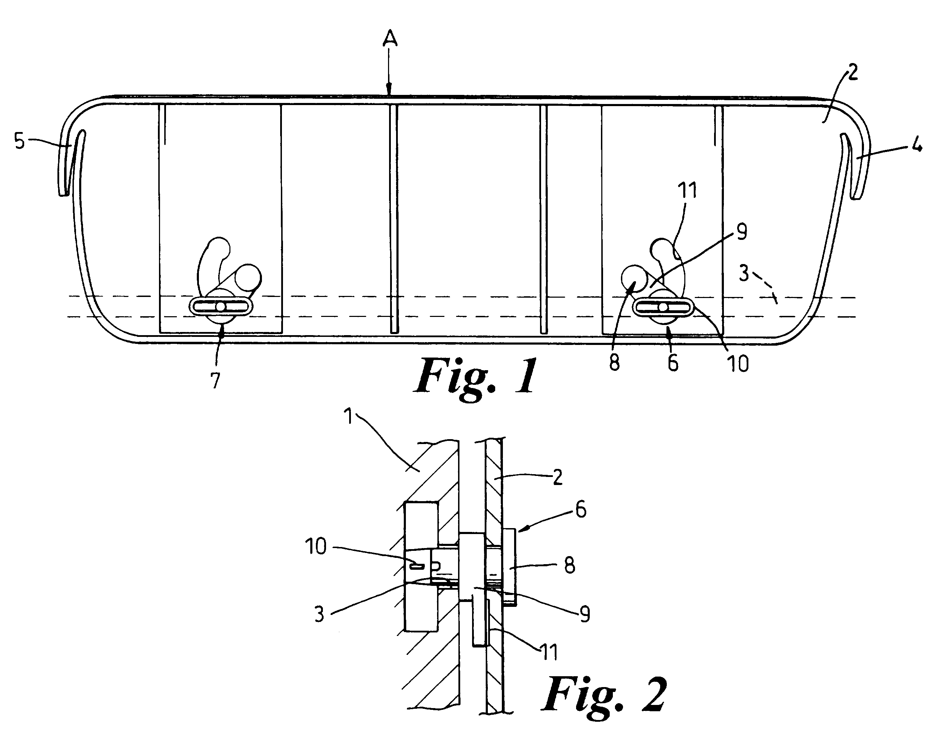

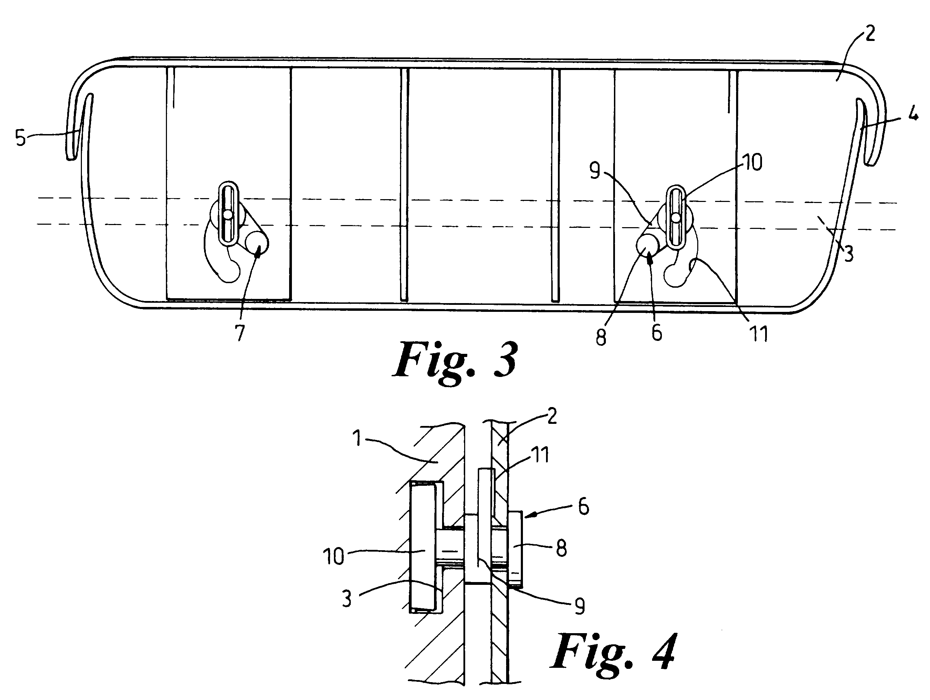

There are two principal stages during assembly of the fastener arrangement in accordance with the present invention. A first stage, as illustrated in Figures 1 and 2 is associated with presentation appropriately of the fastener mechanism within the slot whilst a second stage, with the first member secured to the second member, is illustrated in Figures 3 and 4, wherein the fastener mechanism resiliently engages the slot in order to fasten the first and second members together.

Referring to Figures 1 and 2 in which a fastening arrangement just prior to assembly between a first member 1 and a second member 2, i.e. an armrest component is illustrated. It will be noted that in Figure 1 the first component is substantially in the plane of that Figure and not shown apart from broken lines illustrative of a slot 3 in the first member. Normally, the first member will be a flat panel to which the second member 2 is secured. Thus, the first member may have an open edge over which hooks 4, 5 may be hung in order to appropriately initially present respective fastener mechanisms 6, 7 to the slot 3 in the first member 1. In order to avoid duplication, it will be appreciated that each of the respective fastener mechanisms 6, 7 are substantially the same and thus specific description will be directed principally with regard to fastener mechanism 6 but it should be understood that this description is equally applicable to fastener mechanism 7.

The fastener mechanism 6 is secured to the second member 2 through a pivot mounting 8 and includes a pivot arm 9 and a fastener head 10. Thus, as illustrated in Figures 1 and 2, the fastener head 10 is arranged to enter the slot 3. In order to achieve this entry it will be appreciated that the fastener head 10 is substantially aligned with the slot 3 and, possibly through use of hooks 4, 5, presented to the slot 3 at the appropriate height. With the fastener head 10 entered into the slot 3, the first member 1 and the second member 2 are substantially juxtaposed and configured as required.

The fastener head 10 comprises an elongate winged member significantly longer than the width of the slot 3 at the surface of the first member 1 in accordance with this illustrative embodiment. Thus, when a load is applied in the direction of arrow head A to the second member 2, the action of the fastener mechanism 6 is to rotate about the pivot mounting 8 and so reorientate the fastener head 10 out of alignment with the slot 3. In such circumstances the fastener head 10 can no longer exit the slot so that the first member 1 and the second member 2 are resiliently secured together. Figures 3 and 4 illustrate the first member 1 and the second member 2 fastened together with fastener mechanisms 6, 7 in accordance with the present invention.

The slot 3 as illustrated generally has a T configuration such that there is a narrow surface choke gap through which the fastener head 10 enters the slot 3 and an expansive inner cavity portion of the gap 3 of a wider dimension than the choke gap. Thus, upon rotation of the fastener head 10, that head 10 is allowed to turn out of alignment with the gap 3 in order to engage the slot 3 and so retain the first member 1 with regard to the second member 2. As an alternative, it will be appreciated that the slot 3 could be a plain open channel with the fastener head forced into a sufficiently robust compressive engagement with the sides of that slot in order to retain the first member 1 relative to the second member 2. However, it will be appreciated by providing the choke gap engagement between the fastener head 10 and the slot 3 a more reliable retention will normally be achieved.

It will be appreciated that downward load pressure in the direction of arrow head A must force rotation of the pivot arm 9 about the pivot mounting 10 essentially between two relatively stable states. Thus, as illustrated in Figures 1 and 2, upon initial presentation of the fastener 10 to the slot 3 that head 10 should be relatively stable and not susceptible to wobble to facilitate entry within the slot 3. In the retained fastening state or configuration between the first member 1 and the second member 2 illustrated in Figures 3 and 4, the fastener head 10 should be similarly stable in order to prevent vibration or otherwise induced return rotation of the pivot arm 9 about the pivot mounting 8. Thus, typically, a guide channel 11 will be provided to both facilitate rotation about the pivot mounting 8 and also to provide two detent grip or lock positions consistent with a fastener head 10 entry state depicted in Figures 1 and 2 and the retained state depicted in Figures 3 and 4. These lock grips in the guide channel 11 will typically comprise simple constrictions in that channel 11 appropriate to grip a ferrule 12 associated with the pivot arm 9 on the opposite side to the fastener head 10. In such circumstances, rotation about the pivot mounting 8 can be achieved through hand pressure load applied in the direction of arrow head A, or in the opposite direction, in order to fasten the first member 1 and second member 2 together and for release therebetween.

As an alternative to a longitudinal channel extending through the first member 1, it will be appreciated that simple holes or recesses or cavities could be provided within that first member 1 to accommodate the fastener head 10 in accordance with the present invention. In such circumstances, different positions for locating the first member 1 relative to the second member 2 could be achieved as desired by appropriate choice of slot or slots used for fastening these members 1, 2 together.

As indicated above, typically the fastener head 10 will comprise an elongate wing member secured at one end of the pivot arm 9 opposite to the pivot mounting 8. In order to facilitate rotation of the pivot arm 9 and therefore the fastener head 10 about the pivot mounting 8, it is normal for the ends of the fastener head 10 to be rounded for best presentation to the slot 3 during rotation.

It will be noted that, typically, as a result of the rotation of the pivot arm 9 about the pivot mounting 8, that the second member 2 has moved or been displaced downwardly relative to the slot 8, and therefore the first member 1, upon traversing between the entry stage or configuration depicted in Figures 1 and 2 and the fastened and retained stage or configuration depicted in Figures 3 and 4. In order to accommodate this downward movement, it will be appreciated that the hooks 4, 5 are relatively deep and converging in order to further engage the open edge of the first member 1 upon which they are hung to provide additional retention engagement between the first member 1 and the second member 2.

The load force applied in the direction of arrow head A is perpendicular to the longitudinal direction of the slot 3 such that rotation about the pivot mounting 8 is precipitated. It will be appreciated by those skilled in the art that, if the pivot arm 9 was substantially perpendicular to the slot 3 upon application of the load pressure in the direction of arrow head A then initiation of rotation about the mounting pivot 8 may be difficult. It will therefore be understood that normally, and as illustrated in the Figures, the position of the pivot mounting 8 is such that the pivot arm 9 is always at an angle relative to the slot 3. In such circumstances, a perpendicular load path is not created by the pivot arm 9 and the applied direction of arrow head A will act to precipitate rotation about the mounting pivot 8. However, it will also be appreciated that alternatively a lateral jigger could be applied between respective first members and second members in order to initiate rotation about a mounting pivot.

It will be appreciated that normally two fastening arrangements in accordance with the present invention will be used as depicted in the Figures in order to secure a first member 1 to a second member 2 such that these arrangements act to prevent respective rotation about each other in use. However, alternatively, a single fastening arrangement in accordance with the present invention could be used in association with a latch type arrangement to prevent rotation about the fastening arrangement in accordance with the present invention.

Typically, the fastening mechanism 6, 7 in accordance with the present invention, will be made from plastics components assembled as required with regard to the first member and/or the second member.

## Claims

1. A fastener arrangement for securing members together, the arrangement including a slot (3) in a first member (1) and a fastener mechanism in a second member (2), the fastener mechanism comprising a pivot arm (9) secured to the second member through a pivot mounting (8) and having a fastener head (10) configured to enter the slot (3) in the first member such that, in use upon appropriate load applied between the first member (1) and the second member (2), said pivot arm (9) rotates about the pivot mounting (8) and the fastener head (10) is reorientated to engage the slot (3) to prevent removal therefrom and so resiliently fasten said first member (1) to said second member (2).

2. An arrangement according to Claim 1, characterised in that the pivot arm (9) may rotate back about the pivot mounting (8) under an appropriate reverse load applied between the first member (1) and the second member (2) in order to allow release of said first member (1) from said second member (2).

3. An arrangement according to either Claim 1 or Claim 2, characterised in that the slot (3) has a T cross-section or is an open channel or a hole in the first member (1).

4. An arrangement according to any previous claim, characterised in that the fastener head (10) comprises an elongate winged member having a length significantly greater than the width of the slot (3) at the surface of the first member (1).

5. An arrangement according to Claim 4, characterised in that the elongate wing member has rounded ends.

6. An arrangement according to any previous claim, characterised in that the pivot arm (9) is secured at one end to the pivot mounting (8) and has the fastener head (10) at the opposite end thereof.

7. An arrangement according to any previous claim, characterised in that the fastener head (10) is reorientated by rotation of the pivot arm (9) on the pivot mounting (8) into compressive engagement with the slot (3).

8. An arrangement according to any previous claim, characterised in that the second member (2) includes guide means in order to constrain rotation of the pivot arm (9) about the pivot mounting (8) between an entry configuration where the fastener head (10) is substantially aligned with the slot (3) and a retention configuration where the fastener head (10) is reorientated to engage that slot (3) to prevent removal therefrom and so resiliently fasten said first member (1) to said second member (2).

9. An arrangement according to any previous claim, characterised in that the pivot arm (9) is associated with lock means in order to at least lock said fastener head (10) in engagement with the slot (3) to prevent removal therefrom and so resiliently fasten said first member (1) to said second member (2).

10. An arrangement according to any previous claim, characterised in that the arrangement includes hook means displaced relative to the fastener head (10) and/or the slot (3) in order to facilitate fastener head entry to that slot and appropriate load application to rotate said pivot arm (9) about the pivot mounting (8).

11. An arrangement according to any previous claim, characterised in that the appropriate load is applied substantially perpendicular to a longitudinal axis of the slot (3).

12. A motor vehicle including at least one fastener arrangement as claimed in any preceding claim.
